# EUROPEAN PATENT SPECIFICATION

(11) **EP 0 749 359 B1**
(45) Date of publication and mention of the grant of the patent: **08.08.2001**
(21) Application number: 95912799.4
(22) Date of filing: 02.03.1995
(51) Int. Cl.: B05B 15/04

(54) **MASKING METHOD**
VERFAHREN ZUR ABDECKUNG
PROCEDE DE MASQUAGE

(30) Priority: 08.03.1994 GB 9404417
(43) Date of publication of application: 27.12.1996
(73) Proprietor: MINNESOTA MINING AND MANUFACTURING COMPANY, St. Paul, Minnesota 55133-3427 (US)
(72) Inventor: BASTOW, David, R., Staffordshire B77 3EU (GB)
(74) Representative: Bowman, Paul Alan
(86) International application number: US9502893
(87) International publication number: WO9524273

(56) References cited:
- EP-A- 0 384 626
- PATENT ABSTRACTS OF JAPAN vol. 15 no. 145 (C-0823) ,12 April 1991 & JP,A,03 026379 (HONDA)

## Description

This invention relates to a method of masking a vehicle during spray painting and in particular to a method of masking the "B" post of a vehicle and to an use of a length of masking material for masking a "B" post of an automobile.

The "B" post of a vehicle is the pillar situated between the rear edges of the front door and leading edge of the rear door of a vehicle. The "B" post often supports the hinges of the rear door and the fastening catch for the front door. When re-spraying door panels it is necessary to mask the "B" post in such a way as to prevent overspray going through the gap between the front and rear doors. This is a difficult area to mask since the "B" post is often irregularly shaped and dirty and will not readily accept conventional masking materials having pressure sensitive adhesive. Also, the door panels are generally spaced some distance from the "B" post and it is not possible to rely upon the door holding masking material in place by compressing the material against the "B" post with the edge of the door.

JP-3026379 discloses closing the spacing between the leading edge of a front door and body of an automobile, the spacing between the rear edge of a front door and leading edge of a rear door and the spacing between the rear edge of a rear door and body of an automobile by masking paper applied to the rear (inner) side of the door and associated door or body part.

The present invention provides a simple, effective technique for masking "B" posts.

Therefore according to the present invention there is provided a method of masking a vehicle "B" post comprising the steps of:
providing a resiliently conformable strip of masking material comprising a foam strip having a width greater than the maximum distance between the trailing edge of the front door adjacent the "B" post and the leading edge of the rear door adjacent the "B" post, a thickness of at least 10mm, and a length at least equal to the length of the "B" post to be masked, the strip having pressure sensitive adhesive on a surface adjacent a longitudinal edge of the strip,
opening said front door,
applying said strip to the inner surface of the leading edge of the rear door so that the pressure sensitive adhesive securely adheres the strip to conform with the profile of the leading edge and the strip extends across the "B" post to an extent sufficient to overlap with the trailing edge of the front door when said front door is closed, and
closing the front door to abut said overlap thereby masking the "B" post.

It has been found that by using a resiliently conformable foam strip as masking material it is readily possible to adhere the masking material to the inner surface of the leading edge of the rear door by pressure sensitive adhesive so that the masking material projects across the "B" post and will maintain this configuration. The front door is closed over the overlapping portion of the masking material. The foam strip is sufficiently stiff not to be displaced by the pressure of the paint spray thereby effectively masking the "B" post and preventing ingress of overspray inside the doors.

According to the present invention, there is also provided the use of a lenght of a masking material according to claim 10.

The masking material is generally has a stripe of pressure sensitive adhesive of from 8 to 12mm wide adjacent one longitudinal edge, normally within 2mm of the edge. In one embodiment the strip may have a second adhesive strip adjacent the other longitudinal edge for adhering to the inside of the trailing edge of the from door. The additional adhesive strip may have a width of from 8 to 12mm and is normally positioned with 2mm of the other edge.

The masking strip may conveniently be provided in the form of a roll wound upon itself, optionally about a core. Therefore according to a further aspect of the invention there is provided a roll of masking material comprising a foam strip wound upon itself, the foam strip having a width of from 20 to 40cm, a thickness of from 10 to 20mm and pressure sensitive adhesive on a major surface adjacent a longitudinal edge. The masking material may conveniently be formed from foam web by the process disclosed in EP 0384626.

The strips may be formed in a parallel array each strip being separable. The masking material may be provided as a roll of masking material comprising a parallel array of foam strips conjoined and manually separable, each foam strip having a width of from 20 to 40 mm a thickness of from 10 to 20mm and pressure sensitive adhesive on a major surface adjacent a longitudinal edge. The array may be formed by applying an adhesive to a foam web and slitting the web. Alternatively, the array may be formed in accordance with EP 0384626, which results in an array in which the strips have an elliptical or oval cross-section and adjacent strips are joined by longitudinal welded seams that maintain the curvature of the strips.

The invention will now be described with reference to the accompanying drawings in which:
Figure 1 represents an end view of the rear door of a vehicle and associated end post,
Figures 2(a), (b) and (c) represent cross-sections through A-A, B-B and C-C of Figure 1,
Figure 3 represents a cross-section through a "B" post and front and rear doors showing the masking in accordance with the invention, and
Figure 4 represents a partial side view of a vehicle showing the front and rear doors.

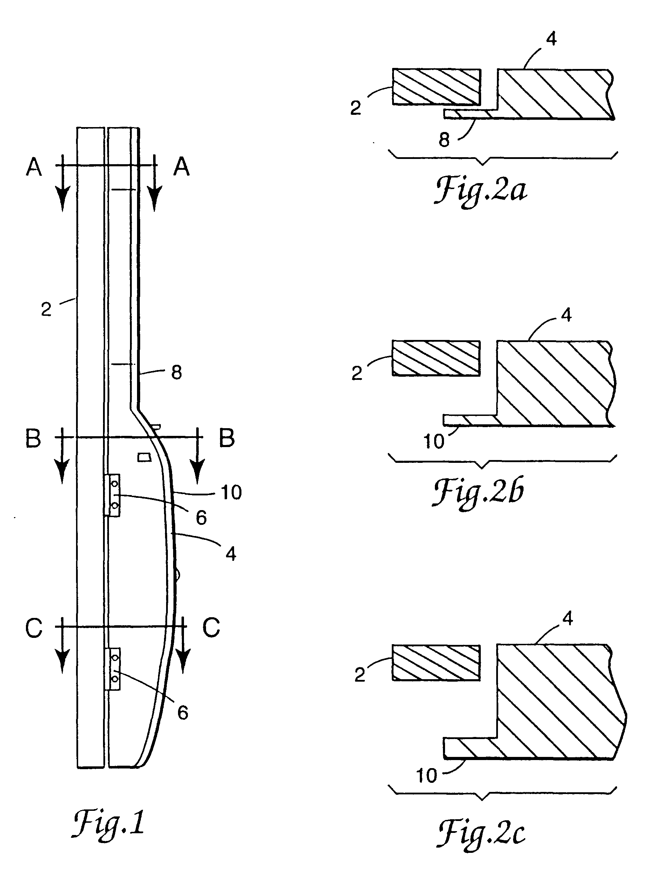

Referring to Figures 1 and 2, the "B" post (2) supports the rear door (4) which is mounted by hinges (6). The upper portion of the door (8) adjacent the window is adjacent the "B" post (2) whilst the lower panel (10) of the door extends away from the "B" post such that there is a significant gap between the "B" post and the edge of the door panel (10).

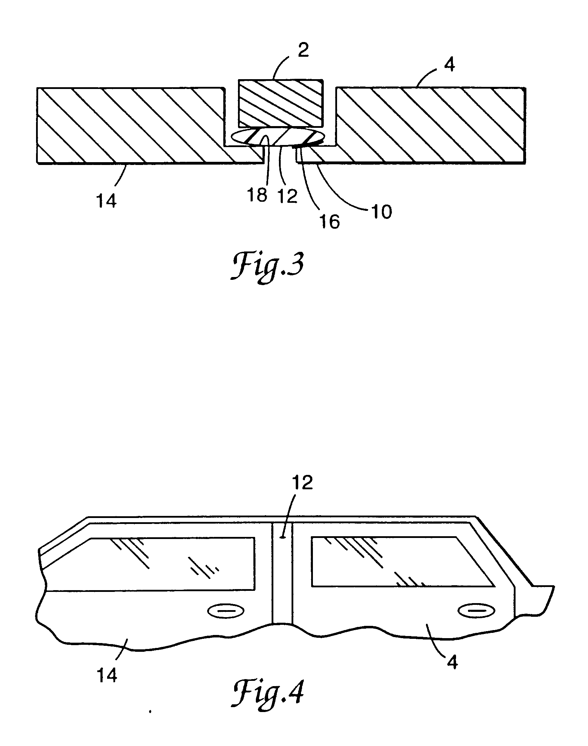

Figures 3 and 4 show the masking material (12) in position masking the "B" post (2). The front door (14) is opened and the masking strip (12) is positioned between the "B" post (2) and the edge of the rear door (4) such that the strip of adhesive (16) is adhered to the edge of the door, particularly in the region of the bottom panel (10). If necessary, the rear door (4) can be opened to facilitate positioning of the masking strip (12). The masking strip (12) will follow the contour of the rear door (4) which is identical to that of the edge (18) of the front door (14). Thus, when the front door is closed the edge (18) will abut the masking strip (12) thereby completing a seal. In one embodiment, the masking strip will include a strip of pressure sensitive adhesive in the region of contact with the edge (18) of the front door (14). The masking material is sufficiently resilient to maintain its position around the contour of the lower panel (10) during the paint spraying operation thereby preventing ingress of paint to the "B" post and interior of the vehicle.

## Claims

1. A method of masking a vehicle "B" post (2) comprising the steps of:
providing a strip of masking material (12) having a width greater than the maximum distance between the trailing edge (18) of the front door adjacent (14) the "B" post and the leading edge of the rear door (4) adjacent the "B" post, and a length at least equal to the length of the "B" post to be masked, the strip having pressure sensitive adhesive (16) on a surface adjacent a longitudinal edge of the strip,
opening said front door (14),
applying said strip to the inner surface of the leading edge of the rear door so that the pressure sensitive adhesive (16) securely adheres the strip to conform with the profile of the leading edge and the strip extends across the "B" post to an extent sufficient to overlap with the trailing edge (18) of the front door (14) when said front door (14) is closed, and
closing the front door (14) to abut said overlap thereby masking the "B" post,
characterised in that the strip of masking material (12) comprises a resiliently conformable foam strip having a thickness of at least 10mm.

2. A method as claimed in Claim 1 in which said strip has a width in the range 20 to 40mm.

3. A method as claimed in Claim 2 in which said strip has a width of about 26mm.

4. A method as claimed in any one of Claims 1 to 3 in which the pressure sensitive adhesive is in the form of a stripe having a width of from 8 to 12mm.

5. A method as claimed in any preceding Claim in which the strip additionally comprises pressure sensitive adhesive in the region of the overlap with the trailing edge of the front door.

6. A method as claimed in Claim 5 in which said pressure sensitive adhesive is in the form of a stripe having a width of from 8 to 12mm adjacent the other longitudinal edge.

7. A method as claimed in any preceding Claim in which the foam has a thickness of from 10 to 20mm.

8. A method as claimed in any preceding Claim in which the foam has a rectangular, oval or elliptical cross-section.

9. A method as claimed in any preceding Claim in which the foam is a polyester polyurethane foam.

10. Use of a length of masking material (12) for masking a "B" post (2) of an automobile, characterised by said length of masking material comprising an elongate foam strip having a longitudinally extending major surface and longitudinally extending edges on opposite sides of said major surface, and by said length of masking material including a longitudinally extending layer of pressure sensitive adhesive (16) on said major surface adjacent one of said edges, in which said major surface has a width of from 20 to 40mm between said edges and said foam strip has a thickness normal to said major surface of at least 10mm.

11. Use of masking material as claimed in Claim 10 wherein said masking material is provided in the form of roll comprising said foam strip wound upon itself.

12. Use of masking material as claimed in Claim 10 wherein said masking material is provided in the form of a roll comprising a parallel array of foam strips conjoined and manually separable, each foam strips conjoined and manually separable, each foam strip having pressure sensitive adhesive on a major surface adjacent a longitudinal edge characterised in that each foam strip has a width of from 20 to 40mm, and a thickness of from 10 to 20mm.

13. Use of masking material as claimed in any one of Claims 10 to 12 in which each foam strip has a rectangular, elliptical or oval cross-section.

14. Use of masking material as claimed in Claim 13 in which the strips have an elliptical or oval cross-section and adjacent strips are joined by longitudinal welded seams that maintain the curvature of the strips.

15. Use of masking material as claimed in any one of Claims 10 to 14 in which said strip has a width of about 26mm.

16. Use of masking material as claimed in any one of Claims 10 to 15 in which the pressure sensitive adhesive is in the form of a stripe having a width of from 8 to 12mm.

17. Use of masking material as claimed in any one of Claims 10 to 16 in which each strip comprises pressure sensitive adhesive on said major surface adjacent the other longitudinal edge.

18. Use of masking material as claimed in Claim 17 in which said pressure sensitive adhesive is in the form of a stripe having a width of from 8 to 12mm adjacent the other longitudinal edge.

## Patentansprüche

1. Verfahren zum Abdecken einer "B"-Säule (2) in einem Fahrzeug, mit folgenden Schritten:
Bereitstellen eines Streifens Abdeckmaterial (12), dessen Breite größer ist als der maximale Abstand zwischen dem an die "B"-Säule angrenzenden hinteren Rand (18) der vorderen Tür (14) und dem an die "B"-Säule angrenzenden vorderen Rand der hinteren Tür (4) und dessen Länge mindestens der Länge der abzudeckenden "B"-Säule gleich ist, wobei der Streifen einen druckempfindlichen Kleber (16) auf einer an einen Längsrand des Streifens angrenzenden Fläche aufweist,
Öffnen der vorderen Tür (14),
Aufbringen des Streifens auf die Innenfläche des vorderen Rands der hinteren Tür, so dass der druckempfindliche Kleber (16) den Streifen sicher derart anklebt, dass er sich an das Profil des vorderen Rands anpasst und in ausreichendem Maße über die "B"-Säule verläuft, so dass er den hinteren Rand (18) der vorderen Tür (14) überlappt, wenn die vordere Tür (14) geschlossen ist, und
Schließen der vorderen Tür (14) zwecks Herstellung der Überlappung, wodurch die "B"-Säule abgedeckt wird,
dadurch gekennzeichnet, dass der Streifen Abdeckmaterial (12) einen elastischen anpassbaren Schaumstreifen mit einer Dicke von mindestens 10 mm aufweist.

2. Verfahren nach Anspruch 1, bei dem der Streifen eine Breite zwischen 20 und 40 mm aufweist.

3. Verfahren nach Anspruch 2, bei dem der Streifen eine Breite von ungefähr 26 mm aufweist.

4. Verfahren nach einem der Ansprüche 1 bis 3, bei dem der druckempfindliche Kleber die Form eines Streifens mit einer Breite von 8 bis 12 mm aufweist.

5. Verfahren nach einem der vorhergehenden Ansprüche, bei dem der Streifen ferner einen druckempfindlichen Kleber im Bereich der Überlappung mit dem hinteren Rand der vorderen Tür aufweist.

6. Verfahren nach Anspruch 5, bei dem der druckempfindliche Kleber die Form eines Streifens aufweist, der angrenzend an einen der beiden Längsränder eine Breite von 8 bis 12 mm hat.

7. Verfahren nach einem der vorhergehenden Ansprüche, bei dem der Schaum eine Dicke von 10 bis 20 mm aufweist.

8. Verfahren nach einem der vorhergehenden Ansprüche, bei dem der Schaum einen rechteckigen, ovalen oder elliptischen Querschnitt aufweist.

9. Verfahren nach einem der vorhergehenden Ansprüche, bei dem der Schaum ein Pofyester-Polyurethan-Schaum ist.

10. Verwendung von Abdeckmaterial (12) zum Abdecken einer "B"-Säule (2) eines Fahrzeugs, dadurch gekennzeichnet, dass das Abdeckmaterial einen langgestreckten Schaumstreifen mit einer längsverlaufenden Hauptfläche und längsverlaufenden Rändern auf gegenüberliegenden Seiten der Hauptfläche aufweist und dass das Abdeckmaterial eine längsverlaufende Schicht druckempfindlichen Klebers (16) auf der Hauptfläche angrenzend an einen der Ränder aufweist, wobei die Hauptfläche eine Breite von 20 bis 40 mm zwischen den Rändern und der Schaumstreifen eine senkrecht zur Hauptfläche verlaufende Dicke von mindestens 10 mm hat.

11. Verwendung von Abdeckmaterial nach Anspruch 10, wobei das Abdeckmaterial die Form einer Rolle mit dem um sich selbst gewickelten Schaumstreifen aufweist.

12. Verwendung von Abdeckmaterial nach Anspruch 10, wobei das Abdeckmaterial die Form einer Rolle mit einem parallelen Array von miteinander verbundenen und manuell trennbaren Schaumstreifen aufweist und jeder Schaumstreifen einen druckempfindlichen Kleber auf einer an einen Längsrand angrenzenden Hauptfläche enthält, dadurch gekennzeichnet, dass jeder Schaumstreifen eine Breite von 20 bis 40 mm und eine Dicke von 10 bis 20 mm hat.

13. Verwendung von Abdeckmaterial nach einem der Ansprüche 10 bis 12, wobei jeder Schaumstreifen einen rechteckigen, elliptischen oder ovalen Querschnitt aufweist.

14. Verwendung von Abdeckmaterial nach Anspruch 13, wobei die Streifen einen elliptischen oder ovalen Querschnitt aufweisen und angrenzende Streifen durch Längsschweißnähte, die die Krümmung der Streifen aufrechterhalten, miteinander verbunden sind.

15. Verwendung von Abdeckmaterial nach einem der Ansprüche 10 bis 14, wobei der Streifen eine Breite von ungefähr 26 mm aufweist.

16. Verwendung von Abdeckmaterial nach einem der Ansprüche 10 bis 15, wobei der druckempfindliche Kleber die Form eines Streifens mit einer Breite von 8 bis 12 mm aufweist.

17. Verwendung von Abdeckmaterial nach einem der Ansprüche 10 bis 16, wobei jeder Streifen einen druckempfindlichen Kleber auf der Hauptfläche angrenzend an einen der beiden Längsränder aufweist.

18. Verwendung von Abdeckmaterial nach Anspruch 17, wobei der druckempfindliche Kleber die Form eines Streifens aufweist, der angrenzend an einen der beiden Längsränder eine Breite von 8 bis 12 mm hat.

## Revendications

1. Procédé de masquage du montant "B" (2) d'un véhicule, comprenant les étapes consistant :
- à prévoir une bande de matériau de masquage (12) ayant une largeur supérieure à la distance maximum entre le bord arrière (18) de la porte avant (14) adjacent au montant "B", et le bord avant de la porte arrière (4) adjacent au montant "B", et une longueur au moins égale à la longueur du montant "B" à masquer, la bande comportant un adhésif (16) sensible à la pression appliqué sur une surface adjacente à un bord longitudinal de la bande,
- à ouvrir ladite porte avant (14),
- à appliquer ladite bande sur la surface intérieure du bord avant de la porte arrière, de sorte que l'adhésif (16) sensible à la pression adhère bien sur la bande, pour s'adapter à la forme du profil du bord avant, et de sorte que la bande s'étend à travers le montant "B" sur une largeur suffisante pour recouvrir le bord arrière (18) de la porte avant (14) lorsque ladite porte avant (14) est fermée, et
- à fermer la porte avant (14) pour qu'elle vienne en appui sur ledit recouvrement, masquant ainsi le montant "B",
caractérisé en ce que la bande du matériau de masquage (12) comprend une bande de mousse élastiquement adaptable à la forme, ayant une épaisseur au moins de 10 mm.

2. Procédé selon la revendication 1, dans lequel ladite bande a une largeur variant dans la plage comprise entre 20 mm et 40 mm.

3. Procédé selon la revendication 2, dans lequel ladite bande a une largeur environ de 26 mm.

4. Procédé selon l'une quelconque des revendications 1 à 3, dans lequel l'adhésif sensible à la pression est sous la forme d'une bande ayant une largeur comprise entre 8 mm et 12 mm.

5. Procédé selon l'une quelconque des revendications précédentes, dans lequel la bande comprend en outre un adhésif sensible à la pression dans la zone de recouvrement avec le bord arrière de la porte avant.

6. Procédé selon la revendication 5, dans lequel ledit adhésif sensible à la pression est sous la forme d'une bande ayant une largeur comprise entre 8 mm et 12 mm, adjacente à l'autre bord longitudinal.

7. Procédé selon l'une quelconque des revendications précédentes, dans lequel la mousse a une épaisseur comprise entre 10 mm et 20 mm.

8. Procédé selon l'une quelconque des revendications précédentes, dans lequel la mousse a une section rectangulaire, ovale ou elliptique.

9. Procédé selon l'une quelconque des revendications précédentes, dans lequel la mousse est une mousse de polyester polyuréthane.

10. Utilisation d'une longueur d'un matériau de masquage (12) pour masquer le montant "B" (2) d'une automobile, caractérisée par ladite longueur du matériau de masquage comprenant une bande allongée en mousse ayant une surface principale s'étendant longitudinalement et des bords s'étendant longitudinalement sur des côtés opposés de ladite surface principale, et par ladite longueur du matériau de masquage comprenant une couche d'adhésif (16) sensible à la pression s'étendant longitudinalement sur ladite surface principale adjacente à un desdits bords, bande de mousse dans laquelle ladite surface principale a une largeur variant entre 20 mm et 40 mm entre lesdits bords, et ladite bande de mousse a une épaisseur au moins de 10 mm, normale par rapport à ladite surface principale.

11. Utilisation d'un matériau de masquage selon la revendication 10, où ledit matériau de masquage est prévu sous la forme d'un rouleau comprenant ladite bande de mousse s'enroulant sur elle-même.

12. Utilisation d'un matériau de masquage selon la revendication 10, où ledit matériau de masquage est prévu sous la forme d'un rouleau comprenant un ensemble parallèle de bandes de mousse conjointes et manuellement séparables, où chaque bande de mousse est conjointe et manuellement séparable, chaque bande de mousse ayant un adhésif sensible à la pression appliqué sur une surface principale adjacente à un bord longitudinal,
caractérisée en ce que chaque bande de mousse a une largeur comprise entre 20 mm et 40 mm et une épaisseur comprise entre 10 mm et 20 mm.

13. Utilisation d'un matériau de masquage selon l'une quelconque des revendications 10 à 12, où chaque bande de mousse a une section rectangulaire, elliptique ou ovale.

14. Utilisation d'un matériau de masquage selon la revendication 13, où les bandes ont une section elliptique ou ovale et où des bandes adjacentes sont jointes par des jonctions soudées longitudinales qui maintiennent la courbure des bandes.

15. Utilisation d'un matériau de masquage selon l'une quelconque des revendications 10 à 14, où ladite bande a une largeur environ de 26 mm.

16. Utilisation d'un matériau de masquage selon l'une quelconque des revendications 10 à 15, où l'adhésif sensible à la pression est sous la forme d'une bande ayant une largeur comprise entre 8 mm et 12 mm.

17. Utilisation d'un matériau de masquage selon l'une quelconque des revendications 10 à 16, où chaque bande comprend un adhésif sensible à la pression appliquée sur ladite surface principale adjacente à l'autre bord longitudinal.

18. Utilisation d'un matériau de masquage selon la revendication 17, où ledit adhésif sensible à la pression est sous la forme d'une bande ayant une largeur comprise entre 8 mm et 12 mm, adjacente à l'autre bord longitudinal.
